# EUROPÄISCHE PATENTANMELDUNG

(11) **EP 2 263 931 A2**
(43) Veröffentlichungstag der Anmeldung: **22.12.2010**
(21) Anmeldenummer: 10003186.3
(22) Anmeldetag: 25.03.2010
(51) Int. Cl.: B62D 33/04

(54) **Anordnung zur Errichtung von Nutzfahrzeugaufbauten**

(30) Priorität: 17.06.2009 DE 102009025632
(71) Anmelder: AluTeam Fahrzeugtechnik GmbH, 33649 Bielefeld (DE)
(72) Erfinder: Schneider, Thomas, 33647 Bielefeld (DE)
(74) Vertreter: Schober, Mirko

(57) **Zusammenfassung**

Anordnung zur Errichtung von Fahrzeugaufbauten und Fahrzeug mit einem Chassis und einer entsprechenden darauf angeordneten Anordnung. Diese wird aus einer Mehrzahl Baugruppen gebildet und kann wenigstens Baugruppen für Seitenwandelemente (2a, 2b) und einem an den Seitenwandelementen (2a, 2b) zu verbindenden Dachelement (1) aufweisen. Ferner ist in der Regel wenigstens ein Verschlusselement vorgesehen, welches im zusammengesetzten Zustand der Anordnung in einem zu öffnenden oder verschließbaren Bereich aufgenommen werden kann. Die das Verschlusselement (4) tragende Struktur (8, 9) kann dabei Teil der Baugruppe für Seitenwandelemente (2a, 2b) und/oder Teil der Baugruppe für das Dachelement (1) und/oder Teil einer zusätzlichen Baugruppe für ein mit den Seitenwandelementen (2a, 2b) und/oder einem ggf. vorhandenen Stirnwandelement zu verbindendes Bodenelement oder Teil eines Fahrzeugchassis sein.

## Beschreibung

Die vorliegende Erfindung betrifft eine Anordnung zur Errichtung von Fahrzeugaufbauten nach dem Oberbegriff von Anspruch 1 sowie ein Fahrzeug mit einer entsprechenden Anordnung nach dem Oberbegriff des Anspruchs 6.

Entsprechende Fahrzeugaufbauten werden mittels gattungsgemäßer Anordnungen bzw. Bausätzen auf einem Fahrzeug montiert. Die Bausätze werden zur Konfektionierung und zum Transport üblicherweise in Baugruppen unterteilt. Diese Baugruppen werden üblicherweise auf Transportgestellen oder Einzelpaletten untergebracht. Bekannte Bausätze bestehen in der Regel aus den Baugruppen für die Seitenwandelemente, die Stirnwand, das Dach und das Heckportal mit Türen oder Klappen darin.

Diese Bausätze werden vom Fahrzeugbauer auf einem Chassis zu einem Fahrzeugaufbau zusammengesetzt. Aufgrund der vielen Baugruppen ist der Transport der Bausätze nicht immer kostengünstig. Je mehr verschiedene Baugruppen benötigt werden, desto größer ist der Stauraumbedarf für entsprechende Bausätze.

Aufgabe der Erfindung ist es daher, eine Anordnung der eingangs genannten Art zur Verfügung zu stellen, welche in diesem Punkt Vorteile bietet und insbesondere kostengünstiger zu transportieren und schneller und kostengünstiger zu montieren ist.

Gelöst wird diese Aufgabe durch eine Anordnung mit den Merkmalen des Anspruchs 1 sowie einem Fahrzeug mit den Merkmalen des Anspruchs 6. Vorteilhafte Ausführungsformen finden sich in den Unteransprüchen.

Erfindungsgemäß ist das Verschlusselement - also eine Heckklappe, eine Tür, Ladebühne oder dergleichen - den Seitenwandelementen bzw. dem Dach oder dem Boden des Fahrzeugaufbaus oder dem Fahrzeugchassis zugeordnet. Dadurch entfällt die Notwendigkeit einer separaten Baugruppe für ein Heckportal. Für einen Fahrzeugaufbau werden daher insgesamt weniger Baugruppen benötigt und es können mehr Bausätze beispielsweise in einem Transportfahrzeug transportiert und so Kosten auch im Hinblick auf eine schnellere Montage gespart werden.

Die Erfindung wird nachfolgend anhand der Zeichenfiguren 1 bis 3 schematisch näher erläutert.

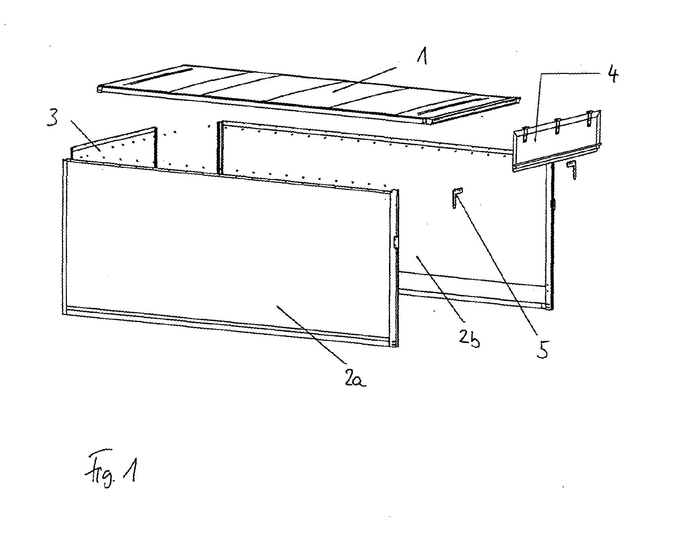

- Figur 1 -: zeigt einen Fahrzeugaufbau in Explosionsdar- stellung,
- Figur 2 -: zeigt einen oberen Eckbereich eines montier- ten Fahrzeugaufbaus in perspektivischer An- sicht,
- Figur 3 -: zeigt eine Längsschnittansicht des in Figur 2 gezeigten Ausschnitts.

Der Fahrzeugaufbau bzw. Bausatz hierfür besteht im Wesentlichen aus einer Baugruppe für das Dach (im folgenden kurz Dach) 1, einer Baugruppe für die Seitenwandelemente (im folgenden kurz Seitenwände) 2a, 2b, und einer Baugruppe für die in Fahrtrichtung vorne liegende Stirnseite (im folgenden kurz Stirnwand) 3. Der Boden bzw. das Chassis ist nicht dargestellt. Erfindungsgemäß ist ferner im gezeigten Beispiel eine Heckklappe 4 als Verschlusselement des Aufbaus vorgesehen, welcher der Baugruppe für das Dach 1 zugeordnet und mit dieser zum Transport konfektionierbar ist. Alternativ können im Heckbereich Türen (nicht gezeigt) eingesetzt werden, welche dann der Baugruppe der jeweiligen Seitenwände 2a, 2b zugeordnet und mit diesen konfektioniert würden. Bei dieser Lösung kann eine separate Baugruppe für Heckportale ersatzlos entfallen.

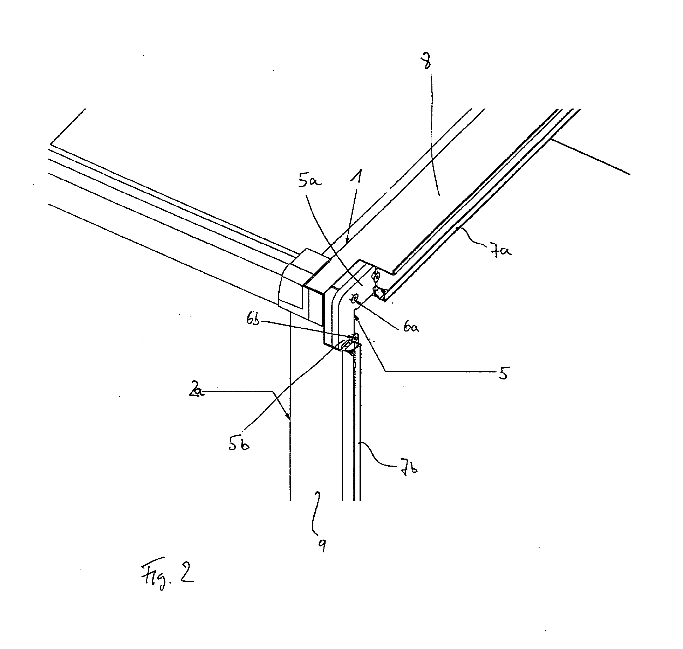

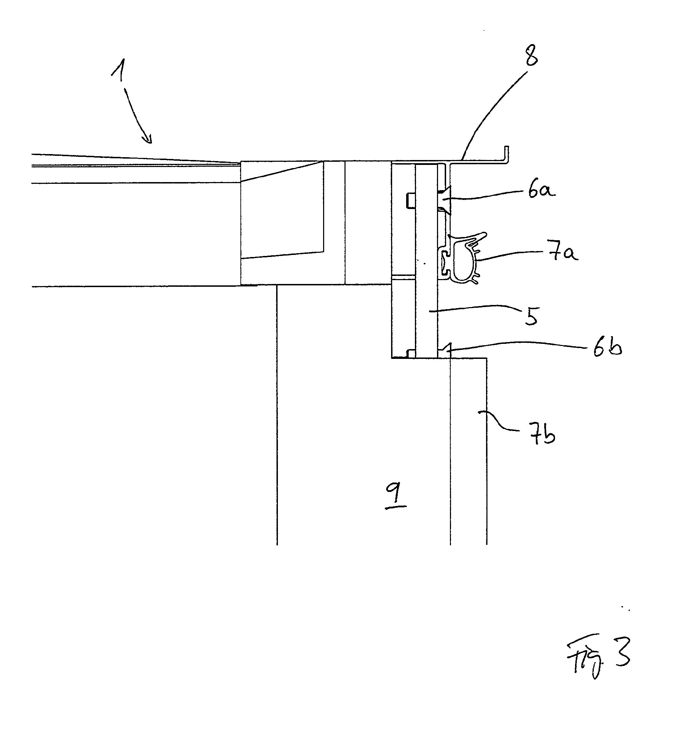

Die einzelnen Wandelemente werden über Profile miteinander verbunden. Dies ist im Bereich des Hecks exemplarisch anhand der Verbindung Seitenwand 2a / Dach 1 in den Figuren 2 und 3 gezeigt, auf welche gleichermaßen Bezug genommen wird.

Die einzelnen Bausätze für die Seitenwände 2a, 2b weisen im gezeigten Beispiel an ihren Kanten Verbindungsprofile 9 auf, gleiches gilt für das Dach 1, an dessen Stirnseite im gezeigten Beispiel ein Profil 8 zur Aufnahme von einer Heckklappe vorgesehen ist. Die Profile 9 und 8 tragen für die Anlage der Heckklappe Dichtprofile 7b, 7a. Die Profile 8, 9 bilden im Heckbereich den Portalrahmen und sind über Verbindungselemente 5, die im gezeigten Beispiel rechtwinklig ausgebildet sind, miteinander verbunden. Zur Verbindung werden die Schenkel 5a, 5b der Verbindungselemente 5 in Öffnungen der Profile 8, 9 geschoben und mittels Schrauben 6a, 6b an den Stirnseiten der hinter den Profilen 8, 9 liegenden Dach- und Seitenwandpaneelen fixiert.

So kann der Fahrzeugaufbau montiert werden, ohne dass es einer gesonderten Baugruppe für ein Heckportal bedarf. Neben dem günstigeren Transport und der schnelleren Be- und Entladung des Transportfahrzeuges wird somit auch eine einfachere und schnellere Montage des Bausatzes zu einem Fahrzeugaufbau ermöglicht.

Auch Ladebühnen, die vom Fahrzeugbauer am Chassis des Fahrzeugs angebracht werden, können als Verschlusselement im Sinne der Erfindung angesehen werden. Auch für diese entfällt die Notwendigkeit eines (Heck-)Portals. Der Fahrzeugaufbau besteht in diesem Fall lediglich aus den Baugruppen für die Seitenwände und für das Dach, sowie ggf. einer Baugruppe für Boden und eine Stirnwand.

## Patentansprüche

1. Anordnung zur Errichtung von Fahrzeugaufbauten, welche aus einer Mehrzahl Baugruppen gebildet werden kann und wenigstens Baugruppen für Seitenwandelemente (2a, 2b) und einem an den Seitenwandelementen (2a, 2b) zu verbindenden Dachelement (1) aufweist, welche zu einem Fahrzeugaufbau zusammengesetzt werden können, an dessen wenigstens einer Stirnseite im zusammengesetzten Zustand ein zu öffnender oder verschließbarer Bereich zur Aufnahme von wenigstens einem Verschlusselement (4) entsteht,
**dadurch gekennzeichnet,**
**dass** die das Verschlusselement (4) tragende Struktur (8, 9) Teil der Baugruppe für Seitenwandelemente (2a, 2b) und/oder Teil der Baugruppe für das Dachelement (1) und/oder Teil einer zusätzlichen Baugruppe für ein mit den Seitenwandelementen (2a, 2b) und/oder einem ggf. vorhandenen Stirnwandelement zu verbindendes Bodenelement oder Teil eines Fahrzeugchassis ist.

2. Anordnung nach Anspruch 1,
**dadurch gekennzeichnet,**
**dass** die tragende Struktur durch an die Seitenwandelemente (2a, 2b) und/oder das Dachelement (1) befestigbare Profile (8, 9) gebildet wird.

3. Anordnung nach einem der vorherigen Ansprüche,
**dadurch gekennzeichnet,**
**dass** das Verschlusselement (4) als Teil der Seitenwandelemente (2a, 2b) und/oder des Dachelements (1) ausgebildet ist.

4. Anordnung nach einem der vorherigen Ansprüche,
**dadurch gekennzeichnet,**
**dass** Seitenwandelemente (2a, 2b) mittels etwa rechtwinkliger Verbindungselemente (5) miteinander verbindbar oder verbunden sind.

5. Fahrzeugaufbau, gebildet aus einer Anordnung nach einem der vorherigen Ansprüche.

6. Fahrzeug mit einem Chassis und einem darauf aufsetzenden Fahrzeugaufbau, welcher aus einer Mehrzahl Baugruppen zusammengesetzt ist, wobei wenigstens eine Baugruppe für Seitenwände (2a, 2b) und eine Baugruppe für ein Dachelement (1) vorgesehen sind, wobei weiter wenigstens ein Verschlusselement (4) vorgesehen ist, welches zum wenigstens teilweisen Verschließen einer Stirnseite des Fahrzeugaufbaus ausgelegt ist,
**dadurch gekennzeichnet,**
**dass** die das Verschlusselement (4) tragende Struktur (8, 9) Teil der Baugruppe für Seitenwandelemente (2a, 2b) und/oder Teil der Baugruppe für das Dachelement (1) und/oder Teil einer zusätzlichen Baugruppe für ein mit den Seitenwandelementen (2a, 2b) und/oder einem ggf. vorhandenen Stirnwandelement zu verbindendes Bodenelement oder Teil eines Fahrzeugchassis ist.

7. Fahrzeug nach Anspruch 6,
**dadurch gekennzeichnet,**
**dass** die tragende Struktur durch an die Seitenwandelemente (2a, 2b) und/oder das Dachelement (1) befestigbare Profile (8, 9) gebildet wird.

8. Fahrzeug nach Anspruch 6 oder 7,
**dadurch gekennzeichnet,**
**dass** das Verschlusselement (4) als Teil der Seitenwandelemente (2a, 2b) und/oder des Dachelements (1) ausgebildet ist.

9. Fahrzeug nach einem der Ansprüche 6 - 8,
**dadurch gekennzeichnet,**
**dass** Seitenwandelemente (2a, 2b) mittels etwa rechtwinkliger Verbindungselemente (5) miteinander verbunden sind.
